# EUROPEAN PATENT APPLICATION

(11) **EP 2 028 089 A1**
(43) Date of publication of application: **25.02.2009**
(21) Application number: 08003609.8
(22) Date of filing: 28.02.2008
(51) Int. Cl.: B62K 1/00

(54) **Monocycle**

(30) Priority: 22.08.2007 DE 202007011749 U
(71) Applicant: BRANC CO., LTD., Fushing Shiang Changhua Hsien (TW)
(72) Inventor: Chen, Ming-Yung, Fushing Shiang Changhua Hsien (TW)
(74) Representative: Reichel, Wolfgang

(57) **Abstract**

A monocycle includes a frame (20), a mandrel (41), and a seat post (31). The frame includes two support bars (21) each having an upper portion provided with a mounting portion (210) for mounting the seat post and a lower portion provided with a mounting section (218) mounted on the mandrel, a clamping sleeve (24) mounted on the seat post and clamped between the mounting portions (210) of the support bars (21), and two locking races (22) each mounted on the mandrel (41) and each combined with the mounting section (218) of the respective support bar (21). Thus, the clamping sleeve (24) is combined with the support bars (21) by a plurality of locking screws (216) without needing a soldering treatment at the connection of the clamping sleeve (24) and the mounting portions (210) of the support bars (21) to prevent the connection from being broken due to an excessive force.

## Description

The present invention relates to a monocycle and, more particularly, to a monocycle available for leisure activities, playing purposes or acrobatics.

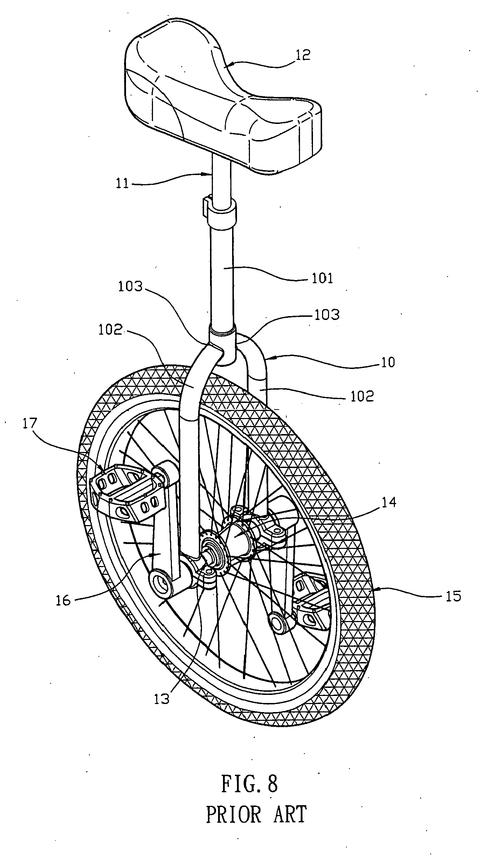

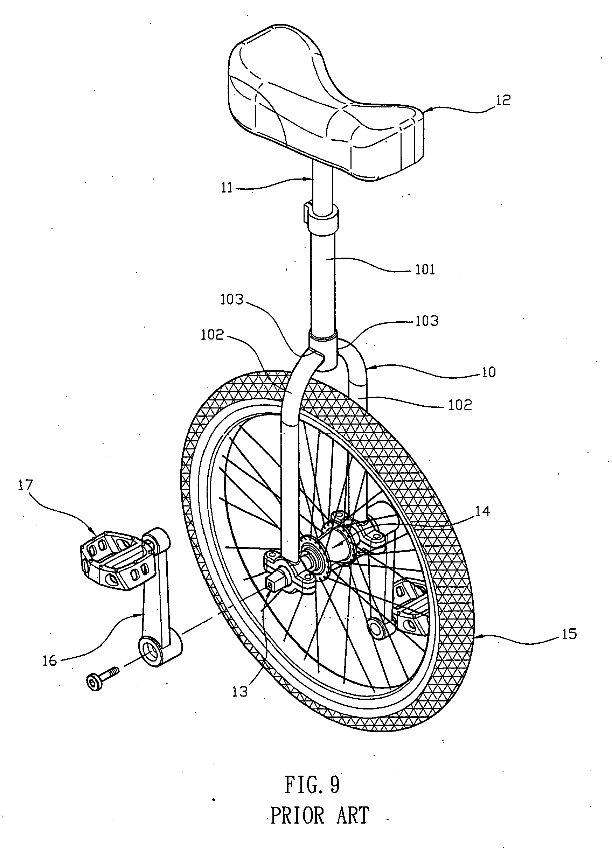

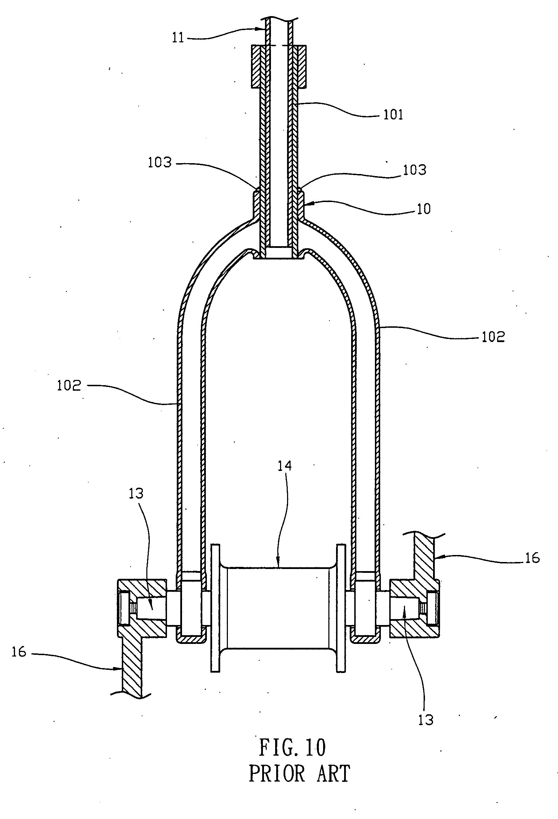

A conventional monocycle in accordance with the prior art shown in Figs. 8-10 comprises a frame 10, a mandrel 13 rotatably mounted on a lower portion of the frame 10 and having two opposite ends protruding outwardly from the frame 10, a hub 14 mounted on the mandrel 13 and located in the frame 10 to rotate with the mandrel 13, a wheel 15 mounted on the hub 14 and located in the frame 10 to rotate with the hub 14, two cranks 16 mounted on the two opposite ends of the mandrel 13 respectively to rotate the mandrel 13, two pedals 17 mounted on the two cranks 16 respectively to rotate the two cranks 16, a seat post 11 having a lower portion mounted on an upper portion of the frame 10, and a seat 12 mounted on an upper portion of the seat post 11. The frame 10 includes a fork 102 mounted on the two opposite ends of the mandrel 13, and a clamping sleeve 101 mounted on the seat post 11 and combined with an upper portion of the fork 102 by a soldering portion 103.

In operation, when the pedals 17 are stepped by a user, the cranks 16 are driven by the pedals 17 to rotate the mandrel 13 which rotates the hub 14 which rotates the wheel 15 so that the wheel 15 is rotatable relative to the frame 10 so as to move the monocycle forward or backward.

However, the clamping sleeve 101 and the upper portion of the fork 102 are combined by soldering, so that the soldering portion 103 at the connection of the clamping sleeve 101 and the upper portion of the fork 102 has a weaker strength, so that the soldering portion 103 is easily cracked or broken due to a heavier load, thereby decreasing the lifetime of the frame 10, and thereby causing danger to the rider on the monocycle.

The primary objective of the present invention is to provide a monocycle having a greater strength.

Another objective of the present invention is to provide a monocycle, wherein the mounting portions of the two support bars are combined together by a plurality of locking screws to clamp the clamping sleeve between the mounting portions of the two support bars so that the clamping sleeve is combined with the mounting portions of the two support bars solidly and stably, thereby enhancing the strength of the frame.

A further objective of the present invention is to provide a monocycle, wherein the clamping sleeve is combined with the mounting portions of the two support bars by a plurality of locking screws without needing a soldering treatment at the connection of the clamping sleeve and the mounting portions of the two support bars to prevent the connection from being broken due to an excessive force, thereby enhancing the lifetime of the frame, and thereby protecting a rider's safety.

In accordance with the present invention, there is provided a monocycle, comprising a frame, a mandrel rotatably mounted on a lower portion of the frame and having two opposite ends protruding outwardly from the frame, and an upright seat post having a lower portion mounted on an upper portion of the frame. The frame includes two support bars each having an upper portion provided with a mounting portion for mounting the seat post and a lower portion provided with a mounting section mounted on the mandrel, a clamping sleeve mounted on the seat post and clamped between the mounting portions of the two support bars, and two locking races each mounted on the mandrel and each combined with the mounting section of the respective support bar to clamp the mandrel between each of the two locking races and the mounting section of the respective support bar.

Favorable embodiments are given by the subclaims.

Further benefits and advantages of the present invention will become apparent after a careful reading of the detailed description with appropriate reference to the accompanying drawings.

In the drawings:
- Fig. 1: is a perspective view of a monocycle in accordance with the preferred embodiment of the present invention.
- Fig. 2: is an exploded perspective of the monocycle as shown in Figure 1.
- Fig. 3: is a partially exploded perspective view of the monocycle as shown in Figure 1.
- Fig. 4: is a front view of the monocycle as shown in Figure 1.
- Fig. 5: is a front cross-sectional view of the monocycle as shown in Figure 1.
- Fig. 6: is a top cross-sectional view of the monocycle as shown in Figure 1.
- Fig. 7: is a side cross-sectional view of the monocycle as shown in Figure 1.
- Fig. 8: is a perspective view of a conventional monocycle in accordance with the prior art.
- Fig. 9: is a partially exploded perspective view of the conventional monocycle as shown in Figure 8.
- Fig. 10: is a front cross-sectional view of the conventional mono-cycle as shown in Figure 8.

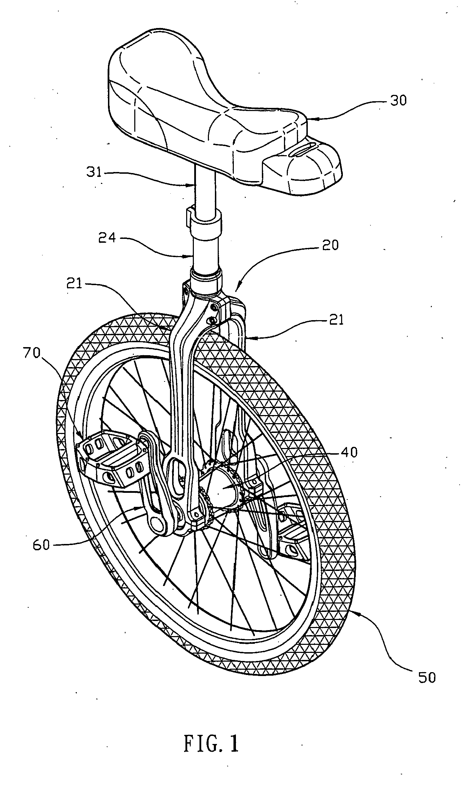

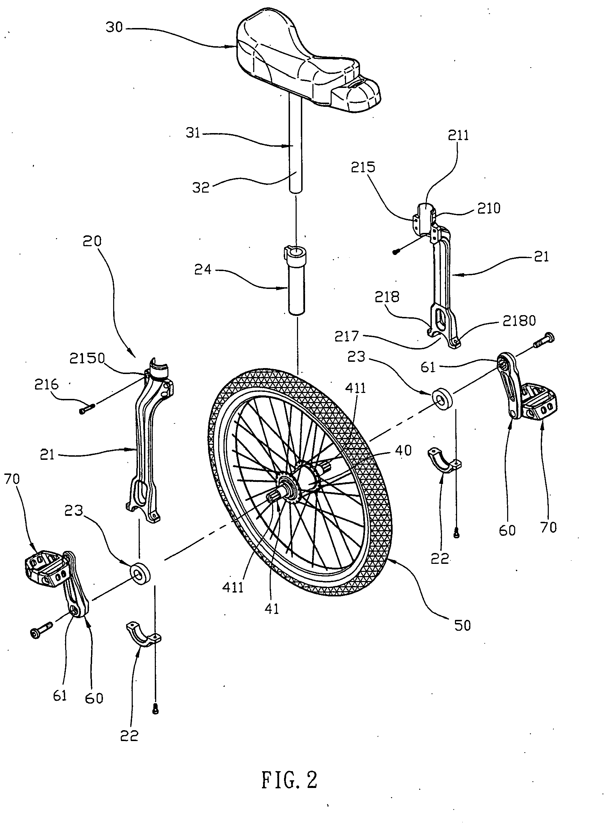

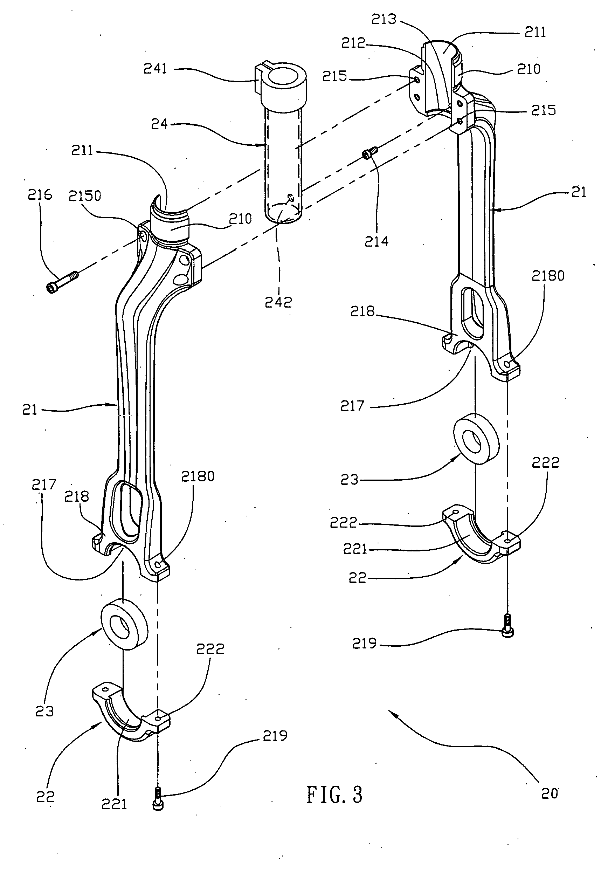

Referring to the drawings and initially to Figs. 1-3, a monocycle in accordance with the preferred embodiment of the present invention comprises a frame 20, a mandrel 41 rotatably mounted on a lower portion of the frame 20 and having two opposite ends protruding outwardly from the frame 20, a hub 40 mounted on the mandrel 41 and located in the frame 20 to rotate with the mandrel 41, a wheel 50 mounted on the hub 40 and located in the frame 20 to rotate with the hub 40, two cranks 60 mounted on the two opposite ends of the mandrel 41 respectively to rotate the mandrel 41, two pedals 70 mounted on the two cranks 60 respectively to rotate the two cranks 60, an upright seat post 31 having a lower portion mounted on an upper portion of the frame 20, and a seat 30 mounted on an upper portion of the seat post 31. Each of the two opposite ends of the mandrel 41 is provided with a toothed locking section 411, and each of the two cranks 60 is provided with a locking bore 61 locked onto the respective locking section 411 of the mandrel 41.

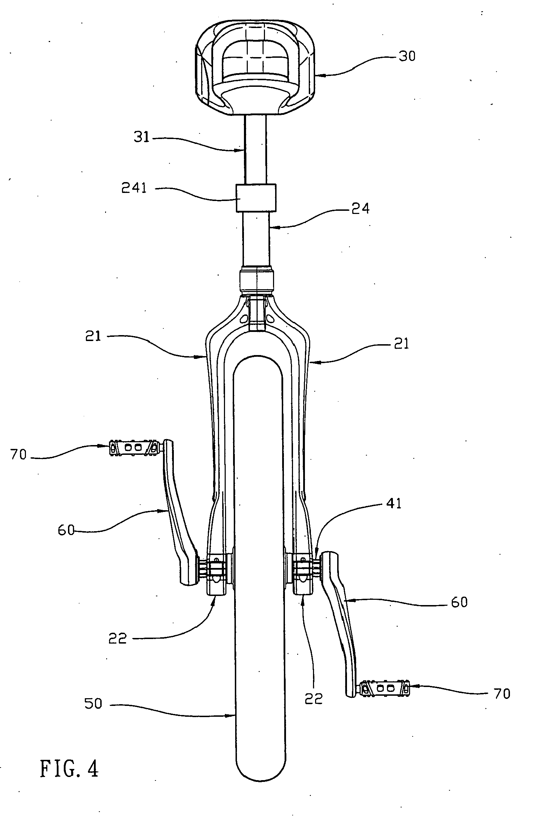

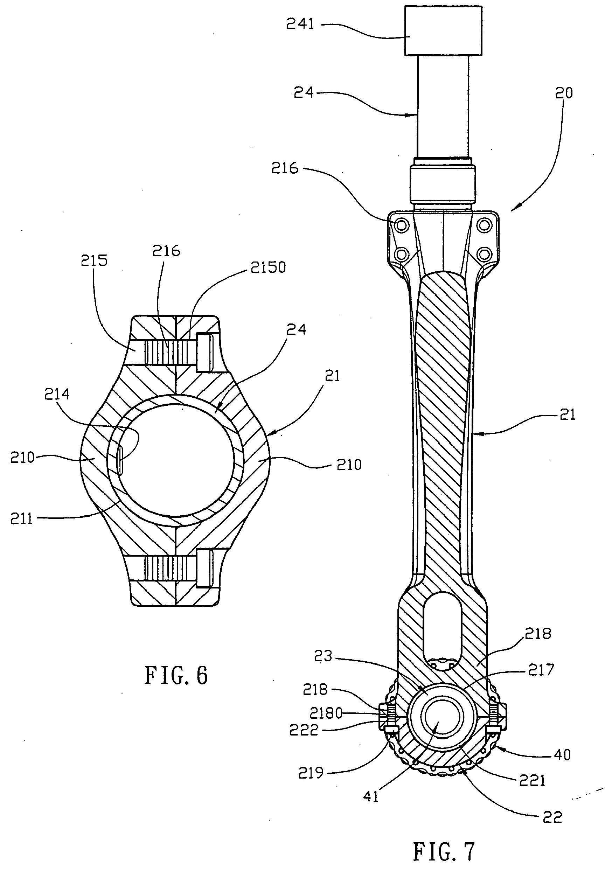

Referring to Figs. 1-7, the frame 20 includes two support bars 21 each having an upper portion provided with a mounting portion 210 for mounting the seat post 31 and a lower portion provided with a mounting section 218 mounted on the mandrel 41, a clamping sleeve 24 mounted on the seat post 31 and clamped between the mounting portions 210 of the two support bars 21, two locking races 22 each mounted on the mandrel 41 and each combined with the mounting section 218 of the respective support bar 21 to clamp the mandrel 41 between each of the two locking races 22 and the mounting section 218 of the respective support bar 21, and two bearings 23 each mounted on the mandrel 41 and each located between the respective locking race 22 and the mounting section 218 of the respective support bar 21.

The two support bars 21 of the frame 20 are combined to form a fork-shaped body. Each of the two support bars 21 of the frame 20 has a substantially inverted L-shaped cross-sectional profile. The mounting portion 210 of each of the two support bars 21 has an inner wall provided with a substantially semi-circular clamping hole 211 to receive the clamping sleeve 24. The clamping hole 211 of each of the two support bars 21 has a bottom provided with a radially and inwardly protruding stop flange 212 to stop the clamping sleeve 24. The clamping hole 211 of any one of the two support bars 21 has a periphery provided with a threaded locking hole 213.

The mounting portion 210 of one of the two support bars 21 has a periphery provided with a plurality of fixing bores 2150, the mounting portion 210 of the other one of the two support bars 21 has an periphery provided with a plurality of screw bores 215, and the frame 20 further includes a plurality of locking screws 216 extending through the fixing bores 2150 of one of the two support bars 21 and screwed into the screw bores 215 of the other one of the two support bars 21 to combine the mounting portions 210 of the two support bars 21 together and to clamp the clamping sleeve 24 between the mounting portions 210 of the two support bars 21.

The clamping sleeve 24 of the frame 20 has a lower end clamped between the clamping holes 211 of the two support bars 21 and an upper end protruding outwardly from the two support bars 21 and provided with a substantially C-shaped clamp 241 for clamping the seat post 31. The clamping sleeve 24 of the frame 20 has a peripheral wall provided with a through hole 242, and the frame 20 further includes a fixing screw 214 extending through the through hole 242 of the clamping sleeve 24 and screwed into the threaded locking hole 213 of the respective support bar 21 to fix the clamping sleeve 24 to the respective support bar 21.

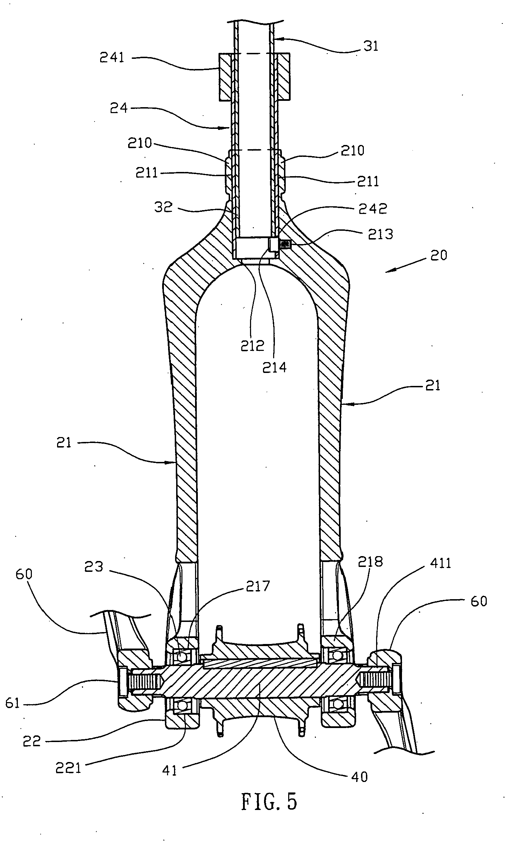

The seat post 31 has a lower end 32 inserted into the clamping sleeve 24 and stopped by the fixing screw 214 as shown in Fig. 5.

The mounting section 218 of each of the two support bars 21 has an inner wall provided with a substantially semi-circular mounting hole 217 to receive the respective bearing 23. The mounting hole 217 of each of the two support bars 21 is perpendicular to the respective clamping hole 211. The mounting section 218 of each of the two support bars 21 has a periphery provided with two opposite screw holes 2180.

Each of the two locking races 22 has an inner wall provided with a substantially semi-circular mounting bore 221 to receive the respective bearing 23. Each of the two locking races 22 has periphery provided with two opposite fixing holes 222, and the frame 20 further includes two fastening screws 219 extending through the fixing holes 222 of the two locking races 22 and screwed into the screw holes 2180 of the two support bars 21 to combine the two locking races 22 and the mounting sections 218 of the two support bars 21 together and to limit the two bearings 23 between the two locking races 22 and the mounting sections 218 of the two support bars 21.

Each of the two bearings 23 is located between the mounting hole 217 of the respective support bar 21 and the mounting bore 221 of the respective locking race 22.

In operation, referring to Figs. 1-7, when the pedals 70 are stepped by a user, the cranks 60 are driven by the pedals 70 to rotate the mandrel 41 which rotates the hub 40 which rotates the wheel 50 so that the wheel 50 is rotatable relative to the frame 20 so as to move the monocycle forward or backward.

Accordingly, the mounting portions 210 of the two support bars 21 are combined together by a plurality of locking screws 216 to clamp the clamping sleeve 24 between the mounting portions 210 of the two support bars 21 so that the clamping sleeve 24 is combined with the mounting portions 210 of the two support bars 21 solidly and stably, thereby enhancing the strength of the frame 20. In addition, the clamping sleeve 24 is combined with the mounting portions 210 of the two support bars 21 by a plurality of locking screws 216 without needing a soldering treatment at the connection of the clamping sleeve 24 and the mounting portions 210 of the two support bars 21 to prevent the connection from being broken due to an excessive force, thereby enhancing the lifetime of the frame 20, and thereby protecting a rider's safety.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention. clamping sleeve 24 between the mounting portions 210 of the two support bars 21 so that the clamping sleeve 24 is combined with the mounting portions 210 of the two support bars 21 solidly and stably, thereby enhancing the strength of the frame 20. In addition, the clamping sleeve 24 is combined with the mounting portions 210 of the two support bars 21 by a plurality of locking screws 216 without needing a soldering treatment at the connection of the clamping sleeve 24 and the mounting portions 210 of the two support bars 21 to prevent the connection from being broken due to an excessive force, thereby enhancing the lifetime of the frame 20, and thereby protecting a rider's safety.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Monocycle, comprising:
a frame (20);
a mandrel (41) rotatably mounted on a lower portion of the frame (20) and having two opposite ends protruding outwardly from the frame (20);
an upright seat post (31) having a lower portion mounted on an upper portion of the frame (20);
wherein the frame includes:
two support bars (21) each having an upper portion provided with a mounting portion for mounting the seat post (31) and a lower portion provided with a mounting section (218) mounted on the mandrel (41);
a clamping sleeve (24) mounted on the seat post (31) and
clamped between the mounting portions (210) of the two support bars (21);
two locking races (22) each mounted on the mandrel (41) and each combined with the mounting section (218) of the respective support bar (21) to clamp the mandrel (41) between each of the two locking races (22) and the mounting section (218) of the respective support bar (21).

2. Monocycle in accordance with claim 1, wherein the mounting portion (210) of each of the two support bars (21) has an inner wall provided with a substantially semi-circular clamping hole (211) to receive the clamping sleeve (101).

3. Monocycle in accordance with claim 1, wherein the mounting portion (210) of one of the two support bars (21) has a periphery provided with a plurality of fixing bores (2150);
the mounting portion of the other one of the two support bars (21) has an periphery provided with a plurality of screw bores (215);
the frame (20) further includes a plurality of locking screws (216) extending through the fixing bores (2150) of one of the two support bars (21) and screwed into the screw bores of the other one of the two support bars (21) to combine the mounting portions (210) of the two support bars (21) together and to clamp the clamping sleeve (24) between the mounting portions (210) of the two support bars (21).

4. Monocycle in accordance with claim 2, wherein
the mounting section (218) of each of the two support bars (21) has an inner wall provided with a substantially semi-circular mounting hole (217) to receive the respective bearing;
each of the two locking races has an inner wall provided with a substantially semi-circular mounting bore to receive the respective bearing.

5. Monocycle in accordance with claim 4, wherein
the mounting section (218) of each of the two support bars (21) has a periphery provided with two opposite screw holes (2180);
each of the two locking races (22) has periphery provided with two opposite fixing holes (222);
the frame (10) further includes two fastening screws extending through the fixing holes (222) of the two locking races (22) and screwed into the screw holes (2180) of the two support bars (21) to combine the two locking races (22) and the mounting sections (218) of the two support bars (21) together and to limit the two bearings between the two locking races (22) and the mounting sections (218) of the two support bars (21).

6. Monocycle in accordance with claim 4, wherein the frame (20) further includes two bearings each mounted on the mandrel (41) and each located between the respective locking race (22) and the mounting section (218) of the respective support bar (21).

7. Monocycle in accordance with claim 6, wherein each of the two bearings (23) is located between the mounting hole (217) of the respective support bar (21) and the mounting bore of the respective locking race(22).

8. Monocycle in accordance with claim 2, wherein the clamping hole (211) of each of the two support bars (21) has a bottom provided with a radially and inwardly protruding stop flange (212) to stop the clamping sleeve (24).

9. Monocycle in accordance with claim 2, wherein
the clamping hole (211) of any one of the two support bars (21) has a periphery provided with a threaded locking hole (213);
the clamping sleeve (24) of the frame (10) has a peripheral wall provided with a through hole (242);
the frame (20) further includes a fixing screw (214) extending through the through hole (242) of the clamping sleeve (24) and screwed into the threaded locking hole (213) of the respective support bar (21) to fix the clamping sleeve (24) to the respective support bar (21).

10. Monocycle in accordance with claim 2, wherein the clamping sleeve (24) of the frame (20) has a lower end clamped between the clamping holes (211) of the two support bars (21) and an upper end protruding outwardly from the two support bars (21) and provided with a substantially C-shaped clamp (241) for clamping the seat post (31).
